Europäisches Patentamt

European Patent Office

Office européen des brevets

(19)

(11) Numéro de publication : **0 148 073**
**B1**

(12) **FASCICULE DE BREVET EUROPÉEN**

(45) Date de publication du fascicule du brevet :
15.03.89

(51) Int. Cl.⁴ : **F 16 L 27/10**

(21) Numéro de dépôt : **84402645.0**

(22) Date de dépôt : **19.12.84**

(54) Joint flexible à rotule d'élastomère précontrainte.

(30) Priorité : **26.12.83 FR 8320902**

(43) Date de publication de la demande :
**10.07.85 Bulletin 85/28**

(45) Mention de la délivrance du brevet :
**15.03.89 Bulletin 89/11**

(84) Etats contractants désignés :
**BE DE FR GB IT LU NL**

(56) Documents cités :
**DE--C-- 928 384**
**GB--A-- 2 017 789**

(73) Titulaire : **Caoutchouc Manufacturé et Plastiques Société Anonyme dite:**
**143 bis rue Yves Le Coz B.P. 554**
**F-78005 Versailles Cedex (FR)**

(72) Inventeur : **Bechu, Jean-Pierre**
**"Les Poissons" 20Ter, rue de Bezons**
**F-92400 Courbevoie (FR)**

## Description

L'invention est relative à une jonction déformable suivant un angle sphérique, par pièce flexible du type caoutchouc adhérisé au métal reliant les parties rigides d'une canalisation de fluide sous forte pression.

Elle est basée sur une précontrainte des matériaux dépassant largement les pressions à étancher.

Les joints d'étanchéité appliquent, de façon générale, une précontrainte ou serrage, exercée par des éléments rigides sur les faces d'appuis d'un composant plastique ou élastomérique appelé communément « joint » ou « garniture ». Si l'on demande à l'assemblage étanche ainsi constitué des débattements dépassant les possibilités des limites élastiques des matériaux, une dissymétrie des déformations peut se produire et déplacer la garniture sur ses faces d'appui, elle perd en certains points sa précontrainte initiale, et l'apparition de fuites ne peut être contrebattue que par un nouveau serrage de la garniture qui a pour effet un fluage dans une nouvelle disposition de moindre course élastique.

Les techniques de joints glissants ou tournants utilisent déjà la liaison par adhérisation du caoutchouc au métal pour relier la partie déformable à une base rigide, ainsi que la précontrainte d'une lèvre d'étanchéité sur un solide glissant, soit par la pression d'un ressort externe, soit par la tension du matériau élastomérique lui-même.

On connaît des joints sphériques du type élastomère-métal, tels ceux décrits dans les brevets DE 928 384 de METALGUMMI et GB 2 017 789 de la S.E.P., mais ils présentent, du fait de leur conception, des risques de perte d'étanchéité et de glissement au cours du temps, en raison du vieillissement libre de l'élastomère.

L'invention a pour objectif d'améliorer la longévité et la fiabilité d'une étanchéité par pièces déformables sous une faible sollicitation angulaire, et d'utiliser les performances permises par le feuilletage caoutchouc-métal susceptible de supporter des pressions permanentes élevées, en mettant en contact directement la matière de hautes performances mécaniques avec la pression du fluide à étancher.

Pour ce faire, elle comprend dans un boîtier, essentiellement une rotule sphérique constituée de deux calottes d'élastomère adhérisé à deux éléments mobiles l'un par rapport à l'autre en débattement angulaire sans guidage métallique, caractérisée en ce que les armatures rigides sont rapprochées à l'assemblage sous l'effet d'une contrainte de précompression telle que ces faces en regard, reliées par l'élastomère, deviennent concentriques lorsque le boîtier est fermé.

Les pièces sont moulées dans une position décalée de façon que la fermeture du boîtier contenant l'ensemble par un couvercle approprié exerce par exemple suivant l'axe de la canalisation la déformation, qui provoque la précontrainte de la matière dans les deux calottes sphériques entourant la canalisation, la composante générale restant nulle sur la rigidité de débattement angulaire.

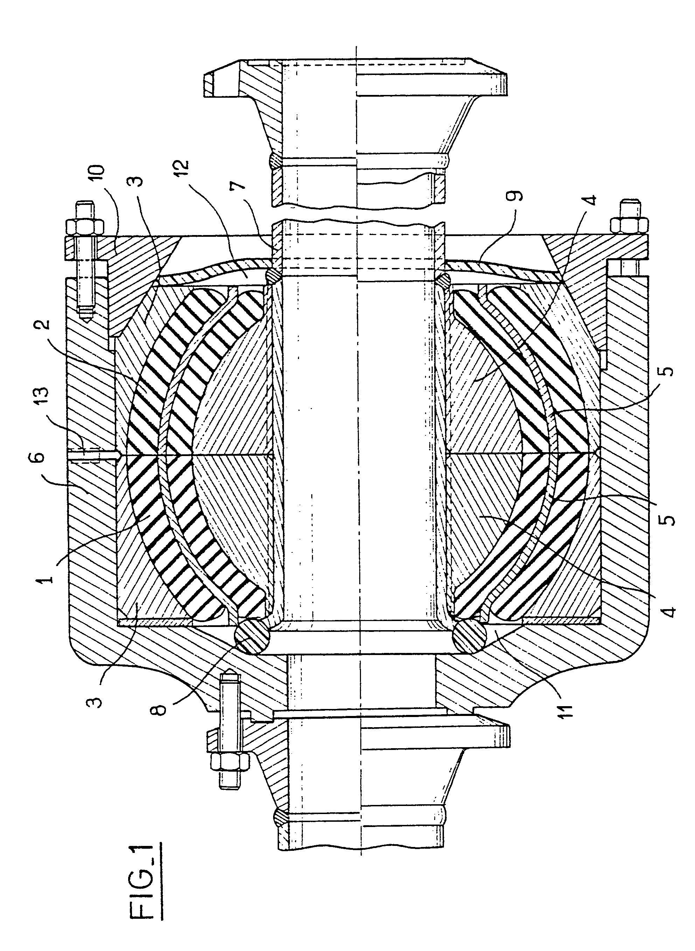

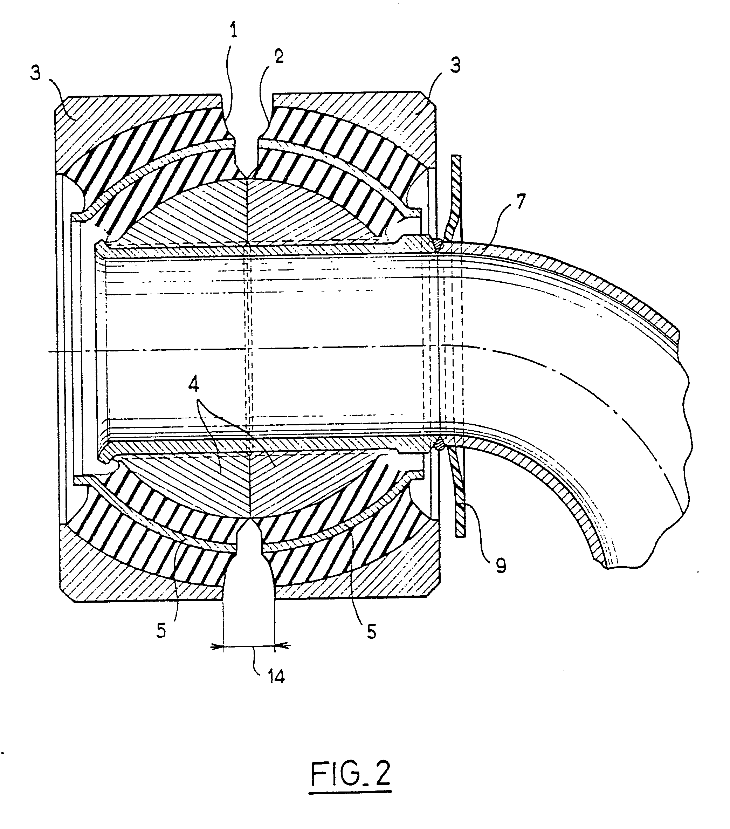

Une utilisation particulièrement performante est représentée sous forme d'ensemble sur la figure 1, la figure 2 reprenant les pièces fondamentales de ce joint flexible lorsqu'elles sont à l'état libre hors du boîtier d'assemblage. Deux demi-rotules (1) et (2), d'apparences identiques, sont réalisées par adhérisation lors du moulage de coquilles appropriées, (3) pour la partie externe, (4) pour le noyau solidaire d'un élément de canalisation rigide (7), avec interposition facultative d'une armature de tôle intermédiaire (5). Celle-ci permet éventuellement le frettage de l'élastomère qui s'opposera à la déformation sous des contraintes permanentes pouvant atteindre ou dépasser 100 bars. Les surfaces sphériques de contact sont déterminées de façon qu'après la fermeture du boîtier (6) par un couvercle approprié représenté en (10), une déformation axiale des demi-rotules (1) et (2) conduise toutes les surfaces des coquilles rigides (3) et (4), ainsi qu'éventuellement (5) à être concentriques.

Sachant l'incompressibilité volumétrique presqu'absolue des élastomères utilisés, on peut prévoir les formes extérieures des moulages (1) et (2), en principe identiques, de façon que toute déformation angulaire entre la canalisation (7) et le boîtier (6) se fasse à volume constant, les surfaces sphériques en regard se déplaçant concentriquement.

La matière élastomérique roule sur elle-même sans perdre sa liaison avec les armatures rigides dans les limites admissibles connues pour de telles liaisons caoutchouc-métal, par exemple d'une valeur tangentielle de 60 % de l'épaisseur initiale aussi fréquemment que nécessaire, avec une durée de vie de bon fonctionnement se mesurant en années, sur l'expérience acquise par les fabricants de telles pièces.

Sur cette expérience, il est bien connu que la pression permanente maintenue par la déformation initiale subit des pertes minimes dues au fluage du matériau dont la loi de variation dans le temps peut être bien déterminée. Tant que cette pression existe, une différentielle de pression due au fluide contenu dans la canalisation (7) modifie très légèrement la répartition des contraintes dans l'élastomère par rapport à l'état d'absence de pression, mais dans un sens réduisant les contraintes dans le matériau en contact avec le liquide, et sans augmenter notablement celles appliquées par la précontrainte de fermeture du boîtier pour son antagoniste.

Certains produits véhiculés pouvant provoquer un gonflement volumétrique de l'élastomère, une telle détérioration se produira dans un sens qui ne peut pas nuire à la fonction d'étanchéité, un joint d'étanchéité classique (8) est représenté sur la face interne, de même que (9) sur la face externe, pour protéger éventuellement l'élastomère d'un contact trop direct avec le fluide d'une part et les agressions extérieures d'autre part.

Facultativement, une matière neutre peut garnir le petit espace ménagé par ces joints en (11) et en (12) si besoin était, en transmettant intégralement les pressions à la matière élastique formant le joint principal.

Par ailleurs, la même expérience des pièces feuilletées de caoutchouc-métal fait connaître que la résistance au cisaillement, qui est ici le basculement de la rotule, est très notablement abaissée par l'existence de la précontrainte, et que cette rigidité de basculement peut devenir très faible, à la façon dont agiraient des coussinets à billes de dimensions infiniment réduites, ce qui est tout à l'avantage de l'articulation flexible ainsi constituée.

Un trou de communication avec l'extérieur est représenté sur le boîtier en (13), pour accroître éventuellement la sécurité du dispositif par un moyen de détection approprié, alertant d'une défaillance de l'étanchéité par cheminement du fluide sur l'une quelconque des faces des armatures, ou à travers l'élastomère par apparition soit du fluide, soit d'une pression mesurable de celui-ci.

La course nécessaire représentée en (14) sur la figure 2 pour exercer la précontrainte, dont les effets sont uniquement radiaux, est calculable par l'expérience des caoutchoutiers. Elle peut avantageusement mettre pratiquement en contact les faces des armatures (3) et (5) ainsi que les surfaces en regard de l'élastomère, mais il n'est pas indispensable de combler l'espace minime qui les sépare, et où apparaîtrait le fluide ou la pression dont il vient d'être question pour la détection d'une défaillance avant la perte totale de l'étanchéité.

L'ordre de grandeur de la poussée du fluide par rapport à la précontrainte peut conduire à choisir des modules du matériau ou éventuellement des formes de sa surface libre différentes, de façon à ce que la concentricité des faces sphériques soit la plus exacte aux pressions de fonctionnement usuelles, et légèrement détériorée soit aux plus basses pressions, soit aux valeurs de pointe exceptionnelles suivant l'optimisation qui sera préférée.

## Revendications

1. Procédé de réalisation d'un dispositif de joint d'étanchéité à rotule sphérique comportant deux éléments rigides acceptant l'un par rapport à l'autre des débattements angulaires par cisaillement de l'élastomère auxquels ils sont adhérisés, caractérisé en ce qu'une précontrainte de montage lors de l'assemblage dans un boîtier (6) oblige les calottes d'élastomère sensiblement hémisphériques des armatures rigides (3) et (4) à prendre, au sein du dispositif, une position concentrique due au rapprochement géométrique desdites armatures rigides, ladite précontrainte de montage étant sans effet sur le rappel élastique du débattement angulaire du dispositif.

2. Procédé de réalisation d'un dispositif de joint d'étanchéité à rotule sphérique selon la revendication 1, caractérisé en ce que la précontrainte de montage lors de l'assemblage dans le boîtier (6) est obtenue par la déformation axiale de la course (4), prévue au moulage.

3. Procédé de réalisation d'un dispositif de joint d'étanchéité à rotule sphérique selon la revendication 1, caractérisé en ce que la précontrainte de montage lors de l'assemblage dans le boîtier (6) est obtenue par une déformation de rétreint radial de l'armature extérieure (3).

4. Procédé de réalisation d'un dispositif de joint d'étanchéité à rotule sphérique selon la revendication 1, caractérisé en ce que la précontrainte de montage lors de l'assemblage dans le boîtier (6) est obtenue par une déformation, à la fois radiale et axiale, du fait d'un emmanchement à force dans ledit boîtier (6) de l'armature rigide extérieure (3) et/ou par une déformation plastique exercée par la contrainte intérieure de l'armature rigide interne (4).

5. Procédé de réalisation d'un dispositif de joint d'étanchéité à rotule sphérique selon l'une des revendications 1 à 4, caractérisé en ce qu'une armature intermédiaire (5), interposée entre les calottes hémisphériques des armatures rigides (3) et (4), assure le frettage de l'élastomère lors du rapprochement de course axiale (14) en permettant une précontrainte de la matière beaucoup plus élevée du fait de la rigidité de déformation améliorée par ledit frettage.

6. Procédé de réalisation d'un dispositif de joint d'étanchéité à rotule sphérique selon l'une des revendications 1 à 5, caractérisé en ce que ledit dispositif est muni d'au moins un pion, ménagé à travers l'une au moins des deux armatures extérieures (3), qui peut être déplacé, par action sur une vis de réglage ou interposition d'une cale, pour modifier la précontrainte de la matière élastique de façon à corriger l'influence du fluage au cours du temps.

## Claims

1. Method for production of a scaling joint device with a ball and socket, comprising two rigid elements allowing angular deflections relative to one another by shearing deformation of the elastomer to which they are bonded, characterised in that an initial assembling stress at the time of installation into a casing (6) constrains the substantially hemispherical elastomer cups of the rigid fittings (3) and (4) to assume within the device a concentric position caused by the geometrical mutual approach of the said rigid fittings, the said initial assembling stress being inoperative regarding the resilient return reaction to the angular deflection of the device.

2. Method for production of a sealing joint device with a ball and socket according to claim 1, characterised in that the initial assembling stress at the time of installation in the casing (6) is obtained by axial deformation of the gap (14) provided during moulding.

3. Method for production of a sealing joint device with a ball and socket according to claim 1, characterised in that the initial assembling stress at the time of installation in the casing (6) is obtained by a radial constricting deformation of the external fitting (3).

4. Method for production of a sealing joint device with a ball and socket according to claim 1, characterised in that the initial assembling stress at the time of installation in the casing (6) is obtained by a simultaneously radial and axial deformation, caused by an engagement in a force fit into the said casing (6) of the rigid external fitting (3) and/or by a plastic deformation applied by the internal stress of the rigid internal fitting (4).

5. Method for production of a sealing joint device with a ball and socket according to one of claims 1 to 4, characterised in that an intermediate fitting (5) placed between the hemispherical cups of the rigid fittings (3) and (4) ensures the binding-in of the elastomer during the axial displacement (14) whilst allowing a much higher initial stress on the material because of the rigidity to deformation improved by the said binding-in.

6. Method for production of a sealing joint device with a ball and socket according to one of the claims 1 to 5, characterised in that the said device is provided with at least one stud fitted through at least one of the two external fittings (3) which may be displaced by action on an adjusting screw or interpositioning of a key to modify the initial stress on the elastic material in such manner as to correct the action of extrusion in the course of time.

**Patentansprüche**

1. Verfahren zur Herstellung einer Kugelgelenk-Dichtungseinrichtung, umfassend zwei starre Elemente, die gegenseitige Winkelbewegungen durch Scherwirkung des Elastomers zulassen, mit dem sie verklebt sind, dadurch gekennzeichnet, daß eine Montagevorspannung vor dem Einbau in ein Gehäuse (6) die im wesentlichen halbkugelförmigen Kappen aus Elastomer von starren Bewehrungen (3 und 4) veranlaßt, im Inneren der Einrichtung eine konzentrische Lage einzunehmen infolge einer geometrischen Annäherung dieser starren Bewehrungen, wobei die besagte Montagevorspannung auf die elastische Rückstellung der Winkelbewegungen der Einrichtung ohne Auswirkung ist.

2. Verfahren nach Anspruch 1, dadurch gekennzeichnet, daß die beim Einbau in das Gehäuse (6) erhaltene Montagevorspannung durch die axiale Verformung des beim Gießen vorgesehenen Bewegungshubes (14) bewirkt wird.

3. Verfahren nach Anspruch 1, dadurch gekennzeichnet, daß die beim Einbau in das Gehäuse (6) erhaltene Montagevorspannung durch eine radiale Einschnürverformung der äußeren Bewehrung (3) bewirkt wird.

4. Verfahren nach Anspruch 1, dadurch gekennzeichnet, daß die beim Einbau in das Gehäuse (6) erhaltene Montagevorspannung bewirkt wird durch eine sowohl radiale als auch axiale Verformung infolge einer erzwungenen Einpressung in dem besagten Gehäuse (6) der starren äußeren Bewehrung (3) und/oder durch eine von der inneren Belastung der starren inneren Bewehrung (4) ausgeübten plastischen Verformung bewirkt wird.

5. Verfahren nach einem der Ansprüche 1 bis 4, dadurch gekennzeichnet, daß eine zwischen den halbkugelförmigen Kappen der starren Bewehrungen (3 und 4) angeordnete Zwischenbewehrung (5) während der Zustellung des axialen Bewegungshubes (14) die Umschnürung des Elastomers bewirkt, wodurch infolge der durch die Umschnürung verbesserten Verformungsfestigkeit eine erheblich vergrößerte Vorspannung des Materials ermöglicht wird.

6. Verfahren nach einem der Ansprüche 1 bis 5, dadurch gekennzeichnet, daß die besagte Einrichtung mit mindestens einem Joch versehen ist, das quer zu mindestens einer der beiden äußeren Bewehrungen (3) angebracht ist und das mittels einer Stellschraube oder durch Zwischenfügung eines Keils verlagerbar ist, um die Vorspannung des elastischen Materials zum Ausgleich des Alterungskriechens zu verändern.

FIG_1

FIG. 2